(19) Europäisches Patentamt / European Patent Office / Office européen des brevets

(11) **EP 4 030 221 B1**

(12) **EUROPEAN PATENT SPECIFICATION**

(45) Date of publication and mention
of the grant of the patent:
**18.12.2024 Bulletin 2024/51**

(21) Application number: **21217476.7**

(22) Date of filing: **23.12.2021**

(51) International Patent Classification (IPC):
**G02C 7/02** *(2006.01)*    **G02C 7/06** *(2006.01)*

(52) Cooperative Patent Classification (CPC):
**G02C 7/022;** G02C 7/061; G02C 2202/24

(54) **EYEGLASS LENS FOR SUPPRESSING PROGRESSION OF MYOPIA**

BRILLENGLAS ZUR UNTERDRÜCKUNG DES FORTSCHREITENS VON MYOPIE

VERRE OCULAIRE PERMETTANT DE SUPPRIMER LA CORRECTION DE LA MYOPIE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **23.12.2020 JP 2020213185**

(43) Date of publication of application:
**20.07.2022 Bulletin 2022/29**

(73) Proprietor: **Tokai Optical Co., Ltd.
Okazaki-shi, Aichi 444-2192 (JP)**

(72) Inventor: **SUZUKI, Eiji
OKAZAKI-SHI, AICHI, 444-2192 (JP)**

(74) Representative: **Cabinet Beau de Loménie
158, rue de l'Université
75340 Paris Cedex 07 (FR)**

(56) References cited:
WO-A1-2020/113212     CN-A- 111 103 701
CN-A- 111 880 323     US-A1- 2019 033 619
US-A1- 2020 089 023

**Description**

Technical Field

The present invention relates to an eyeglass lens for suppressing the progression of myopia, capable of performing myopia refractive correction and suppressing the progression of myopia at the same time.

Background Art

One of factors that cause the progression of myopia is hyperopic blur (forming a clear image behind the retina) at the central part of the retina caused by an accommodation lag when viewing a near distance (insufficient or omission of lens accommodation with respect to lens accommodation power required for focusing on a near object). That is, a process is undergone in which a focal point of the central part of the retina is behind the retina, and an eye axis accordingly extends, and the eye becomes long in the front-rear direction, and as a result, myopia progresses. Therefore, provision of power for assisting accommodation power by eyeglasses when viewing a near distance to prevent a clear image from being formed behind the retina leads to suppression of the progression of myopia.

There is the idea that, to suppress the progression of myopia, not only an image forming state at the center of the retina but also an image forming state in the retina periphery are important. This theory is because the eye axis also extends at the retina periphery due to hyperopic blur and the retina periphery also causes the progression of myopia, and therefore, the progression of myopia can be suppressed by preventing a focal point on the retina periphery from being formed behind the retina by correction with eyeglasses.

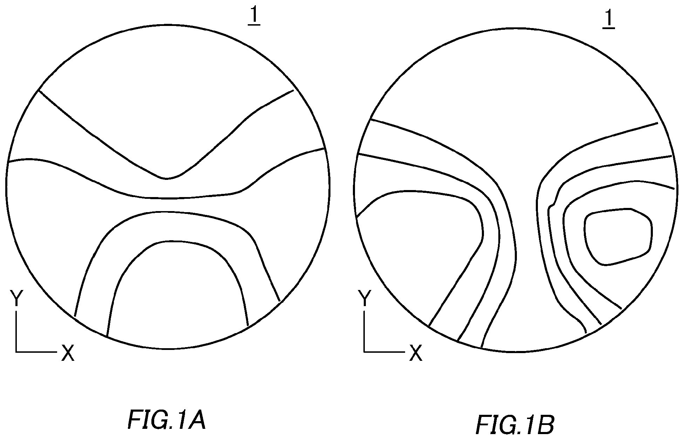

Eyeglasses that prevent image formation behind the retina in the retina periphery as described above are disclosed in Patent Document 1. Patent Document 1 discloses an eyeglass lens for suppressing the progression of myopia by forming a second refraction area of a plurality of convex lens-like island-shaped areas 2 independent from each other formed in a ring shape around a first ametropia correcting area 1 that corrects myopia as illustrated in, for example, FIG. 1. With this eyeglass lens, a focal point on the retina periphery is corrected to be formed in front of the retina due to the plurality of island areas 2, so that the progression of myopia can be suppressed.

Patent Document 2 discloses anti-myopia-progression spectacles of another type.

Citation List

Patent Document

|  |  |
|---|---|
| Patent Document 1: | US Patent No. 10268050 |
| Patent Document 2 : | US Patent application No. 2020/089023 |

Summary of Invention

Technical Problem

The eyeglass lens of Patent Document 1 is effective as an eyeglass lens for suppressing the progression of myopia, however, when a visual line is directed downward to view a near distance, the second refraction area (that is, island-shaped areas 2) is in a ring shape, so that the visual line may overlap the second refraction area, and downward viewability may not be good. When viewing a near distance, an accommodation lag occurs theoretically, so that the myopia progression suppressing effect for a user who often views a near distance may deteriorate.

According to the present invention, the problems described above are improved and an eyeglass lens for suppressing the progression of myopia is provided which realizes good viewability through myopia refractive correction viewability and suppression of the progression of myopia at the same time.

Solution to Problem

In order to solve the problems above, an eyeglass lens according to claim 1 is provided. This eyeglass lens includes a first region for viewing a comparatively far distance, disposed at an upper side of a lens, and a second region disposed at a lower side than the first region and having more positive refractive power relatively than the first region, wherein a myopia progression suppressing region is disposed to surround a periphery of the first region and the second region.

With this eyeglass lens for suppressing the progression of myopia, a focal point on the retina periphery is disposed in front of the retina due to the myopia progression suppressing region surrounding the periphery of the first region and the second region, so that an effect of suppressing the progression of myopia is obtained. In addition, when viewing a near distance, the second region having more positive refractive power than the first region can be used, so that an accommodation lag is less likely to occur, and the effect of suppressing the progression of myopia is less likely to deteriorate.

The "first region for viewing a comparatively far distance, disposed at an upper side of a lens" and the "second region having more positive refractive power than the first region" is a lens having a lens power progressively added so as not to have a discontinuous portion between the first region and the second region namely a progressive power lens. Other examples not forming part of the claimed invention may be a lens having a discontinuous portion between the first region and the second region such as, for example, a BF (bifocal) lens accompanied by a small lens or a Franklin lens divided into two upper and lower portions.

Although a clear boundary may be provided between the first region, the second region and the myopia progression suppressing region in examples not forming part of the claimed invention, particularly in a lens having a progressively added lens power and having no discontinuous portion like a progressive power lens, depending on the shape of the myopia progression suppressing region, the region may have a portion overlapping a part (outer side) of the first region and the second region.

The myopia progression suppressing region is a region that prevents an image of incident light directed toward the retina periphery from being formed behind the retina by an optical effect, and is a region in which a landscape through the eyeglass lens cannot be clearly viewed. The myopia progression suppressing region is a region that transmits light but cannot form a focal point in the vicinity of the retina when a lens wearer views, such as, a group of several convex lenses according to the claimed invention, rough surface and other examples not falling within the scope of the claimed invention, described later.

According to the claimed invention, the myopia progression suppressing region consists of a group of a large number of convex lenses having a larger curvature than a front surface of the lens and spaced from each other so as to spread in two-dimensional directions.

In a case where the convex lens is a convex lens with a larger curvature than the lens front surface, when incident light is focused on the retina periphery, an image of the light is not formed behind the retina, so that an effect of suppressing the progression of myopia is obtained. In addition, when viewing a near distance, the second region having more positive refractive power than the first region can be used, so that an accommodation lag is less likely to occur, and the effect of suppressing the progression of myopia is less likely to deteriorate. In addition, in an eyeglass lens portion without a convex lens, the visual line is transmitted through, so that a clear vision region is accordingly widened.

The size of each convex lens preferably has a diameter of approximately 0.1 to 3 mm. All convex lenses may have or may not have the same size. A pupil diameter of a lens wearer is approximately 3 mm, and if the convex lenses become sufficiently larger than this pupil diameter, when the visual line passes through the convex lens portion, viewability depends on only the convex lenses, and the visual field is obstructed. The large number means not only a plurality but also a number necessary for obtaining the optical effect.

The group of convex lenses can suppress obstruction of the visual field in the myopia progression suppressing region to some degree by creating a state where light rays that do not pass through the convex lenses and light rays that pass through the convex lenses are mixed in a constant ratio in light rays passing through the pupil.

It is preferable that an interval between the convex lenses adjacent to each other is equal to the diameter of the convex lenses . Of course, the adjacent interval does not necessarily have to be equal to the diameter. The convex lenses do not necessarily have to all have the same shape, and may be arranged at even intervals or may be arranged randomly.

The convex lenses are preferably arranged so that a density of a portion overlapping the visual field (portion close to the lens center in the vertical direction), in particular, a near vision portion is lower (sparse) than a density of a portion far from the visual field.

For example, in a region having great aberration of a base lens and not assumed to be used for viewing an object through the region like a lateral side of a near vision portion of a progressive power lens, the convex lenses may be arranged at narrower intervals or at no intervals.

On the other hand, in a region having less aberration of the base lens and assumed to be used for viewing an object through the region like a lateral side of a far vision portion, the convex lenses are preferably arranged at sufficient intervals.

In the case of a progressive power lens, when eyeglasses slide down, the downward visual line does not pass through the near vision portion to which positive power is added, and the effect of suppressing an accommodation lag when viewing a near distance disappears. A lens wearer does not notice this since positive power is progressively added.

In order to prevent the problem above, at an upper side of the far vision portion, convex lenses are arranged at a high density by reducing or eliminating adjacent intervals, and accordingly, an effect of causing the wearer to notice the sliding down of the eyeglasses can also be obtained.

The myopia progression suppressing region consisting of a large number of convex lenses may be disposed as a ring-shaped region around the first region and the second region, or may be disposed at the left and the right so that major portions of the first region and second region at upper and lower sides from the center remain. When the myopia progression suppressing region is disposed at the left and the right, the myopia progression suppressing regions are preferably disposed in a region lower than the center. This disposition is preferable since the visual field in the region lower than the center is narrower than in the upper region although it is desirable to secure the visual field in a region higher than the center.

An eyeglass lens having these convex lenses is preferably manufactured by, for example, using a lens mold and curing a thermosetting monomer.

The group of the convex lenses disposed close to a center side of the lens has a smaller curvature than the group of the convex lenses disposed close to an outer circumference of the lens.

A portion close to the center side of the lens is likely to enter the visual field of a user, so that by setting a curvature to be relatively smaller than that of a portion close to the outer circumference of the lens, a sense of discomfort in use can be reduced.

According to the claimed invention, the group of a large number of the convex lenses consists of convex lenses having toroidal surface shapes, and are disposed at an angle that cancels out astigmatism of the lens.

The toroidal surface is a surface with different curvatures in perpendicular directions on a toric surface like a surface of a donut. Astigmatism is aberration caused by a difference between refractive powers in perpendicular directions on a lens surface, so that when a convex lens is a convex lens having a toroidal surface shape, by disposing a convex lens at an angle that cancels out astigmatism of the lens surface, the astigmatism is reduced.

In a further aspect not forming part of the claimed invention, the myopia progression suppressing region is a rough surface region in which the lens front surface scatters light, and is configured to surround the periphery of the first region and the second region.

Accordingly, an image of incident light directed toward the retina periphery is not formed behind the retina, so that the effect of suppressing the progression of myopia is obtained.

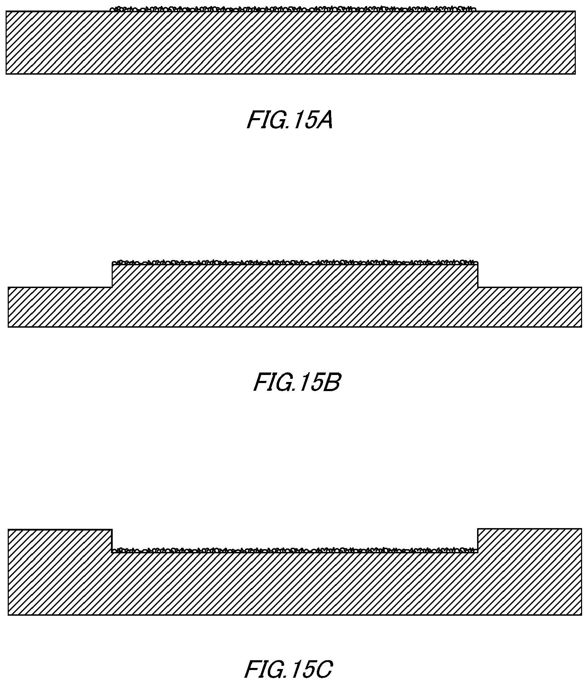

The rough surface region is a region in which light can be viewed although light is scattered and cannot be clearly viewed. The rough surface region may be formed of a surface enabling the entirety of the inside of the rough surface region to scatter light, and a large number of regions that scatter light may be arranged as a large number of spots spaced from each other so as to spread in two-dimensional directions in a planar view. For scattering light, for example, the rough surface region is preferably formed to have a large number of fine protrusions having a large number of surfaces different in angle as illustrated in FIGS. 15A to 15C. According to this configuration, a frosted glass that scatters light is formed.

As the rough surface region, for example, a rough surface may be formed by directly applying sand blasting to the eyeglass lens, or an eyeglass lens having a rough surface region may be manufactured by using a lens mold after forming a rough surface on the lens mold by sand blasting.

In a further aspect not forming part of the claimed invention, the myopia progression suppressing region is configured so as to include a rough surface region that is formed into two or more independent island shapes.

Accordingly, when incident light is focused on the retina periphery, an image of the incident light is not formed behind the retina, so that an effect of suppressing the progression of myopia is obtained, and in addition, in an eyeglass lens portion having no island-shaped rough surface region, the visual line is transmitted and a clear vision region is accordingly widened.

Based on a front surface of the lens as a reference surface, the island-shaped rough surface region may be formed at the same height position as the reference surface as illustrated in FIG. 15A, may be formed at a position projecting upward as illustrated in FIG. 15B, or conversely, may be formed at a recessed position so as to form a recess as illustrated in FIG. 15C.

A rough surface region may be composed of a number of independent island-shaped spots. In a further aspect, the myopia progression suppressing region is a region that surrounds the first region and the second region from the circumference so as to assume a ring-shaped donut form.

This represents a detailed example of a position where the myopia progression suppressing region is formed. As in this case, when the myopia progression suppressing region is a surrounding region assuming a ring-shaped donut form, it covers the entire region of the retina periphery, so that the effect of suppressing the progression of myopia increases.

According to a further aspect, the myopia progression suppressing region is disposed at left and right positions across the first region and the second region.

This represents a detailed example of a position where the myopia progression suppressing region is formed.

As in this case, when the myopia progression suppressing region is provided at both sides of the first region and the second region, the visual field is secured from a distance field to a near field, and normal use as eyeglasses becomes less stressful. In a further aspect, a distribution density of the group of the convex lenses according to the claimed invention or the rough surface regions distributed in the myopia progression suppressing region is set to become lower at the lower side than at the upper side.

Accordingly, difficulty in viewing due to the presence of convex lenses in the visual line direction of a wearer when the wearer views downward is reduced. The distribution density may discontinuously or continuously and gradually change. In a further aspect, a distribution density of the group of the convex lenses according to the claimed invention or the rough surface region composed of a number of independent island-shaped spots disposed close to the center side of the lens is set to be lower than a distribution density at a position close to the outer circumference of the lens.

With this means, normal use as eyeglasses becomes less stressful.

According to a further aspect, the convex lenses disposed in the left-right direction of the second region produce smaller positive power than the convex lenses not disposed in the left-right direction of the second region.

Accordingly, when the wearer views downward, it can be prevented that power of the convex lenses overlap the power of the second region and causes excessive positive power.

According to a further aspect, a progressive zone region in which refractive power progressively changes is provided between the first region and the second region, and an addition gradient is set so that addition power is gradually added from the first region to the second region.

That is, the lens has a progressive power surface as a progressive power lens. When the eyeglass lens for suppressing the progression of myopia uses the first region and the second region as the progressive power lens described above, the visual line can be smoothly moved without image discontinuity (prism jump) on the boundary between the far vision portion and the near vision portion, and when viewing a near distance, the second region can be used and an accommodation lag is less likely to occur.

According to a further aspect, the myopia progression suppressing region is disposed at left and right positions across the progressive zone region and the second region.

That is, the myopia progression suppressing region is not disposed in the first region having a wide visual field, and since the visual field becomes comparatively narrow when viewing a near distance, by disposing the myopia progression suppressing region on both sides of the progressive zone region and the second region of the lower region, the progression of myopia can be suppressed while the visual field is secured.

For example, the myopia progression suppressing region is preferably a region surrounding the first region from a position 3 mm or more higher than a center of the first region. According to further aspect, the myopia progression suppressing region is formed on a surface on a side different from either the front surface or the back surface of the lens on which the first region, the second region, and the progressive zone region are provided.

Accordingly, the lens surface on the side where the convex lenses are formed can be formed into a base surface with a simple shape, so that the convex lenses can be easily designed, and a myopia progression suppressing region with a uniform shape is easily formed. The myopia progression suppressing region side is preferably formed as a surface on the object side.

According to a further aspect, with respect to a surface ratio obtained by dividing a total area occupied by the myopia progression suppressing region by a total area occupied by a portion other than the myopia progression suppressing region, the area ratio in the vicinity of the first region is smaller than the area ratio in the vicinity of the second region.

Accordingly, in a progressive power lens, the vicinity of the second region, in particular, left and right regions have a concentration of astigmatism and distortion, and frequency of viewing an object through these portions is low. However, these regions are regions that easily cause hyperopic blur in the retina periphery when viewing a near distance. Therefore, with this means, for example, bulges as the convex lens are disposed at a relatively higher density in these portions to efficiently exert the myopia progression suppressing effect without comparatively losing the visual field.

According to a further aspect, the myopia progression suppressing region consists of the group of the convex lenses, and refractive power of the convex lens disposed in the vicinity of the progressive zone region and the second region is set to be more positive than refractive power of the convex lens in the myopia progression suppressing region disposed in the vicinity of the first region.

It is assumed that as the refractive power of the convex lens body becomes more positive, the myopia progression suppressing effect increases, however, on the other hand, a refractive power difference from the portion other than the convex lenses increases, so that viewability through the myopia progression suppressing region deteriorates.

In addition, the regions across the second region have a concentration of astigmatism and distortion of the progressive power lens, so that the frequency of viewing an object through these portions is low. However, when viewing a near distance, these regions are regions that easily cause hyperopic blur in the retina periphery. Therefore, in the present means, by disposing convex lenses with more positive power in these regions, the myopia progression suppressing effect can be efficiently exerted without comparatively losing the visual field.

The aspects shown in the respective means described above can be combined according to the appended claims.

The disclosure of Japanese Patent Application No. 2020-213185 filed December 23, 2020 including its specification, claims and drawings, can be referred to by the person of the art when considering the present disclosure.

Advantageous Effects of Invention

By wearing an eyeglass lens for suppressing the progression of myopia according to the invention as claimed in this application, due to the myopia progression suppressing region surrounding the first region and the second region, a focal point on the retina periphery is disposed in front of the retina, so that an effect of suppressing the progression of myopia of a wearer is obtained. When viewing a near distance through this lens, the second region having more positive refractive power relatively than the first region can be used, so that an accommodation lag is less likely to occur, and the effect of suppressing the progression of myopia is less likely to deteriorate.

Brief Description of Drawings

[FIGS. 1] FIGS. 1 are diagrams illustrating lens properties of a myopia suppressing lens of a first embodiment, FIG. 1A is an average power distribution chart in a light transmitting condition, and FIG. 1B is an astigmatism distribution chart in the same condition.
[FIG. 2] FIG. 2 is an explanatory view describing a distribution state of spots in a myopia progression suppressing region formed on a front surface of the myopia suppressing lens of the first embodiment.
[FIG. 3] FIG. 3 is a sectional view taken along line A-A in FIG. 2.
[FIG. 4] FIG. 4 is an explanatory view describing a distribution state of spots in a myopia progression suppressing region formed on a front surface of a myopia suppressing lens according to a second embodiment.

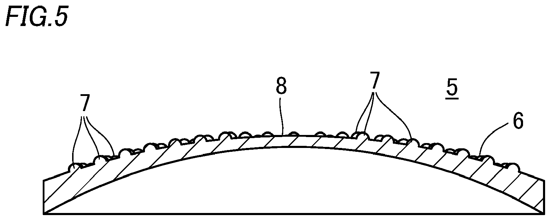

[FIG. 5] FIG. 5 is a sectional view taken along line B-B in FIG. 4.
[FIG. 6] FIG. 6 is an explanatory view describing a distribution state of spots in a myopia progression suppressing region formed on a front surface of a myopia suppressing lens according to a third embodiment.
[FIG. 7] FIG. 7 is an explanatory view describing a distribution state of spots in a myopia progression suppressing region formed on a front surface of a myopia suppressing lens according to a fourth embodiment.
[FIGS. 8] FIGS. 8 are explanatory views describing a power change when canceling astigmatism of a base lens by a spot having a toroidal surface in the fourth embodiment.
[FIG. 9] FIG. 9 is an explanatory view for describing forms of lines passing through a center of the toroidal surface of the spot having the toroidal surface in the fourth embodiment.
[FIG. 10] FIG. 10 is an explanatory view describing a distribution state of spots in a myopia progression suppressing region formed on a front surface of a myopia suppressing lens of a fifth embodiment.
[FIG. 11] FIG. 11 is an explanatory view describing a distribution state of spots in a myopia progression suppressing region formed on a front surface of a myopia suppressing lens of a seventh embodiment.
[FIG. 12] FIG. 12 is an explanatory view describing a distribution state of spots in a myopia progression suppressing region formed on a front surface of a myopia suppressing lens of another embodiment.
[FIG. 13] FIG. 13 is an explanatory view for describing island-shaped rough surface regions, not forming part of the claimed invention
[FIG. 14] FIG. 14 is a plan view of a myopia suppressing lens having rough surface regions, not forming part of the claimed invention
[FIGS. 15] FIGS. 15A to 15C are explanatory views of images of rough surfaces for describing patterns of rough surface forming positions.

Description of Embodiments

Hereinafter, detailed embodiments of an eyeglass lens for suppressing the progression of myopia (hereinafter, referred to as myopia suppressing lens) will be described.

<First Embodiment>

As a first embodiment, a myopia suppressing lens 1 having progressive properties illustrated in FIGS. 1A and 1B on a lens back surface was manufactured. In FIGS. 1A and 1B, the X direction represents the horizontal direction during use of the eyeglass lens, and the Y direction represents the vertical direction in the same state. Basic design conditions for the myopia suppressing lens 1 are as follows.

For both of the left and right lenses, S -1.00D, ADD 1.50D, inset theoretical value of 2.1 mm, and a progressive zone length of 13 mm were set. That is, as illustrated in FIG. 1A, the average power (lens power) is S -1.00D in a far vision region, and the average power is 0.50D in a near vision region.

As seen from FIG. 1B, the far vision region higher than the center is a wide region and has no astigmatism, and this region narrows toward a lower side and becomes a narrow progressive zone region, and expands again in the near vision region. The region without astigmatism of the near vision region is narrower than the far vision region, but is wide enough when viewing a near distance. Astigmatism concentrates on left and right sides of the progressive zone region.

The myopia suppressing lens 1 is an aspheric lens made of a material with a refractive index of 1.60, and has:

Front surface: 2.0 curve (based on 1.523)
Back surface: Progressive form determined to have predetermined myopia correction and accommodation assisting power
Central thickness: 1.0 mm
Lens diameter: 75 mm

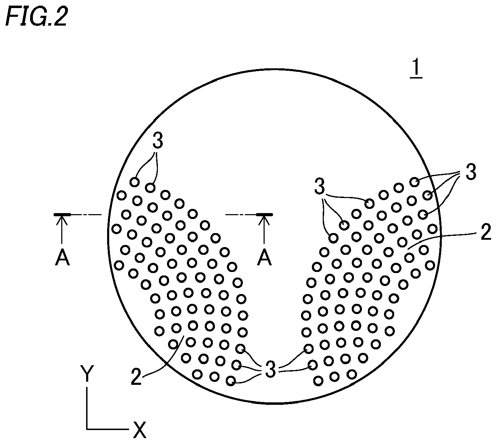

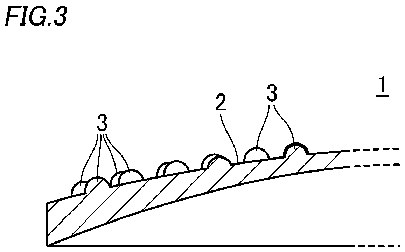

As illustrated in FIGS. 2 and 3, on a lens front surface of the myopia suppressing lens 1, myopia progression suppressing regions 2 are formed. The X direction in FIG. 2 is a horizontal direction during use of the eyeglass lens, and the Y direction is a vertical direction in the same state. The myopia progression suppressing region 2 consists of a group of a large number of dome-shaped small spots 3. In the myopia progression suppressing region 2, an area ratio of an area occupied by all spots 3 and an area occupied by a portion other than the spots 3 is set to 1 to 1 in the first embodiment.

The myopia progression suppressing regions 2 are disposed at both left and right positions avoiding a progressive zone at the center in a lens vertical direction in a lens lower region so as not to overlap a far vision region. These disposed positions are regions that approximately overlap with regions having a concentration of astigmatism in the astigmatism distribution chart in FIG. 1B. That is, the myopia progression suppressing regions 2 are disposed in regions that do not obstruct the visual field in the far vision region, the progressive zone region, and a near vision region, and are regions in which incident light is focused on the retina periphery.

As illustrated in FIG. 3, the spots 3 in the first embodiment are dome-shaped convex lenses with a diameter of 2 mm molded integrally with the myopia suppressing lens 1. The spot 3 has a perfect circular external shape as viewed from a vertex direction of the spot 3. In the present first embodiment, the myopia progression suppressing regions 2 consist of groups of six curved rows separated into left and right and substantially along astigmatism directions convex inward respectively formed of pluralities of spots 3 arranged in series. In the row direction, the spots 3 are arranged at intervals of 2 mm, and the rows are successively arranged in an orderly manner so that a distance between row centerlines is 4 mm. The curve of the spots 3 is 5.0 curve based on 1.523.

With the myopia suppressing lens 1 illustrated in the first embodiment, an effect of suppressing the progression of myopia of a wearer is obtained, and when viewing a near distance through this lens, the near vision region can be used, so that an accommodation lag is less likely to occur, and in this respect as well, the progression of myopia is suppressed. In addition, the myopia progression suppressing regions 2 are disposed in regions having a concentration of astigmatism, and do not obstruct normal vision.

<Second Embodiment>

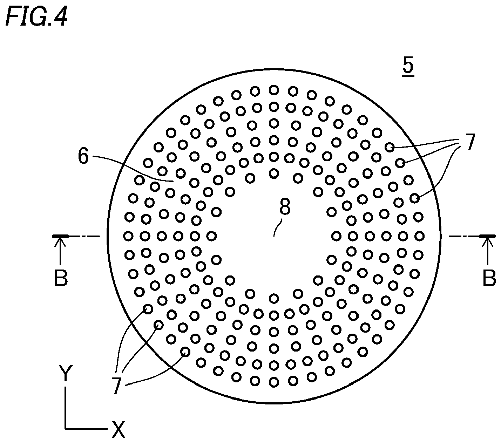

A second embodiment is a variation of the first embodiment. A myopia suppressing lens 5 of the second embodiment has the same properties as the progressive properties illustrated in FIGS. 1A and 1B of the myopia suppressing lens 1 of the first embodiment, and are designed under the same basic design conditions as those of the myopia suppressing lens 1. In the myopia suppressing lens 5 of the second embodiment, a myopia progression suppressing region 6 is formed in a ring shape so as to surround a clear vision region 8 disposed at the lens center as illustrated in FIG. 4. Spots 7 of the myopia suppressing lens 5 are individually shaped into the same convex lenses as the spots 3 of the first embodiment, but are arranged in a different pattern. The myopia progression suppressing region 6 consists of a group of 6 toric curved rows formed by concentrically arranging a large number of spots 7. The large number of spots 7 are successively arranged at intervals of 2 to 3 mm in the row direction, and the rows are arranged in an orderly manner so that a distance between row centerlines is 4 mm.

With the myopia suppressing lens 5 of the second embodiment, it is assumed to obtain an effect of suppressing the progression of myopia by suppressing hyperopic blur in the retina periphery, and an effect of suppressing the progression of myopia by preventing an accommodation lag is further added.

In addition, in comparison with a progressive power lens to be frequently used as a means to simply prevent an accommodation lag and suppress the progression of myopia, by surrounding a lens use portion by spots, the effect can be prevented from being reduced by half due to a failure of alignment between a wearer, s eye position and the lens, such as sliding down of the eyeglasses.

It is also possible that a vertically long elliptic non-spot portion is provided so that the far vision portion and the near vision portion are formed as non-spot portions.

<Third Embodiment>

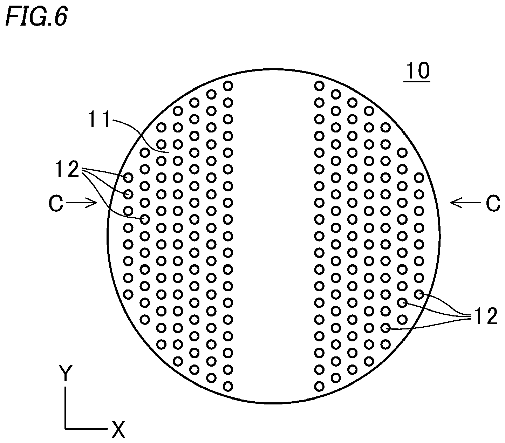

A third embodiment is also a variation of the first embodiment. A myopia suppressing lens 10 of the third embodiment has the same properties as the progressive properties illustrated in FIGS. 1A and 1B of the myopia suppressing lens 1 of the first embodiment, and are designed under the same basic design conditions as those of the myopia suppressing lens 1. As illustrated in FIG. 6, myopia progression suppressing regions 11 of the third embodiment are disposed at both left and right sides avoiding, in particular, a region in which the visual line moves up and down (width of approximately 20 to 30% of a lens diameter length in the left-right direction) at the center in a lens vertical direction. Spots 12 of the myopia suppressing lens 11 are individually shaped into the same convex lenses as the spots 3 of the first embodiment, but are arranged in a different pattern. The myopia progression suppressing regions 11 consist of groups disposed separately at the left and the right and each including 7 linear rows. The large number of spots 12 are arranged at intervals of 3 mm in the row direction, and the rows are successively arranged in an orderly manner so that a distance between row centerlines is 4 mm.

With the myopia suppressing lens 10 of the third embodiment, since the spots 12 are absent in the far vision region and the near vision region, while usability as an eyeglass lens is improved, an effect of suppressing the progression of myopia is extracted by surrounding the visual field by the myopia suppressing regions at the lateral portions. As compared with the first embodiment, spots are disposed at the lateral sides of the far vision portion as well, so that the effect of suppressing the progression of myopia caused by hyperopic blur in the retina periphery is considered to become relatively great.

<Fourth Embodiment>

A fourth embodiment is also a variation of the first embodiment. The myopia suppressing lens 10 of the fourth embodiment has the same properties as the progressive properties illustrated in FIGS. 1A and 1B of the myopia suppressing lens 1 of the first embodiment, and are designed under the same basic design conditions as those of the myopia suppressing lens 1.

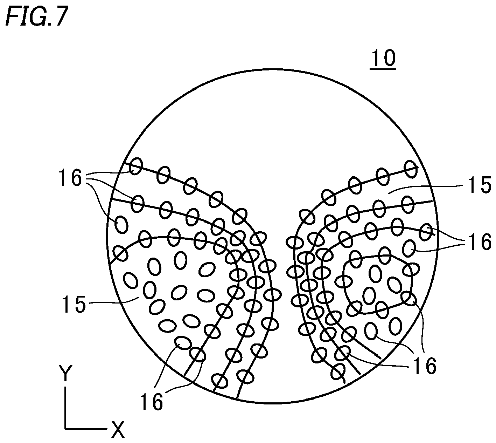

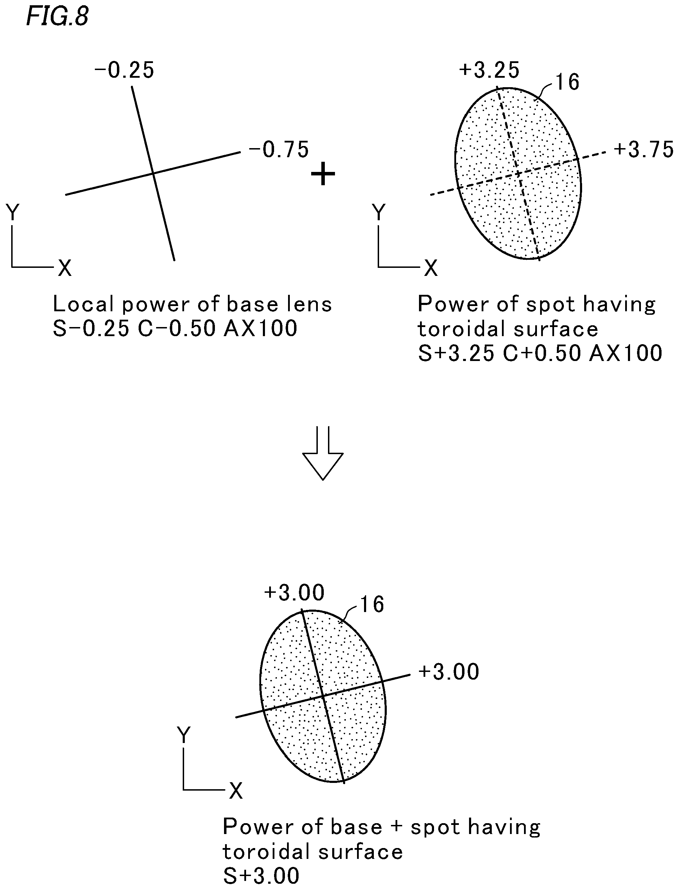

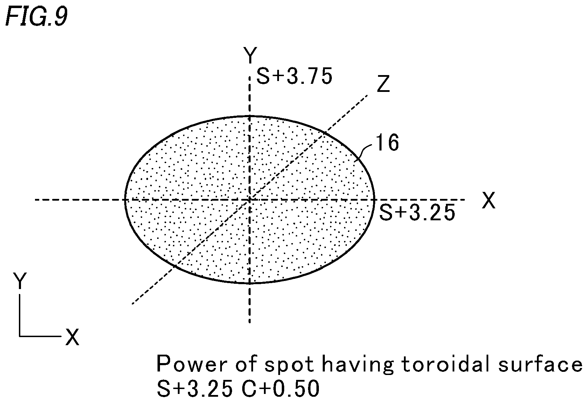

In the fourth embodiment, spots 16 of myopia progression suppressing regions 15 disposed on a lens front surface have different shapes and different arrangement angles. In the fourth embodiment, description is given by focusing on the shapes and arrangement angles of the spots 16. As illustrated in FIGS. 7 and 8, the large number of spots 16 of the fourth embodiment are formed of toroidal surfaces the lengths and curvatures of which become maximum and minimum in longitudinal and transverse directions orthogonal to each other. As illustrated in FIG. 9, when C1 represents the curvature in the X direction and C2 represents the curvature in the Y direction, a sag amount Z (form of line passing through the center of the toroidal surface) of the spot 16 is defined as:

$$Z = (C1 \times X^2 + C2 \times Y^2 / (1+\text{sqrt}(1-C1^2 \times X^2 + C^2 \times Y^2)$$

Here, it is assumed that, as illustrated in FIG. 8, the myopia suppressing lens 10 that becomes a base has a local power of S -0.25D C -0.50D and an astigmatic axial direction (AX)100 based on the X direction. On the other hand, the toroidal surface of the spot 16 is expressed as S +3.25D and C +0.50D in terms of diopter, and when the spot 16 overlaps the myopia suppressing lens 10 in a state where the phase is changed by 100° rotation (AX100) based on the X direction, their C powers cancel each other and disappear. C power is astigmatism, and astigmatism at this position can be canceled out by disposing the spot 16 at a proper angle (phase) . The proper angle is an angle that causes a maximum power direction of the local power of the myopia suppressing lens 10 and a maximum power direction of the toroidal surface of the spot 16 to become orthogonal to each other. However, a slight angle deviation is allowed, so that by roughly disposing the spots in such angle directions, astigmatism in the myopia progression suppressing region 15 can be canceled, and the burden on the wearer's eye can be reduced.

As illustrated in FIG. 7, as a result of providing progressive properties to the spots 16, in the peripheral region of the myopia suppressing lens 10 in which astigmatism occurs, the spots 16 are disposed to cancel the astigmatism. The maximum power direction of the toroidal surface of the spot 16 disposed on a contour line of astigmatism is substantially orthogonal to the astigmatism. A phase of the spot 16 not on the contour line is also determined in consideration of astigmatism. A larger number of spots (also in various sizes) than in FIG. 7 can be disposed according to the direction of astigmatism.

Accordingly, when an image of a light ray passing through the spot region is formed before the retina, the focal depth of the light ray is prevented from being extended according to astigmatism of the base lens, and the image can be stably formed before the retina.

<Fifth Embodiment>

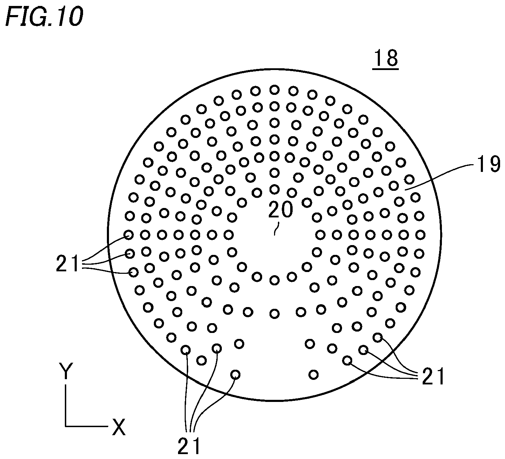

A fifth embodiment is a variation of the second embodiment. As illustrated in FIG. 10, in a myopia suppressing lens 18 of the fifth embodiment, the shape of a myopia progression suppressing region 19 is formed around a clear vision region 20 as with the ring-shaped myopia progression suppressing region 6 of the second embodiment. In the fifth embodiment, unlike the second embodiment, spots 21 constituting the myopia progression suppressing region 19 are disposed to become sparser, that is, lower in density toward the lower side.

With this myopia suppressing lens 18, viewing through, in particular, the near vision region is easier.

<Sixth Embodiment>

In the first to fifth embodiments, the curves of the convex lens shapes of the spots 3, 7, 12, and 16 are formed with the same curvature, and accordingly, positive powers added by the spots 3, 7, 12, and 16 are also the same in the myopia progression suppressing regions 6, 11, 15, and 19.

However, in any of these lenses, the lens power (S power) of the near vision region is positive, so that when the positive powers of the spots 3, 7, 12, and 16 are added, a portion overlapping a region to which power is added in the near vision region provides excessive correction. Therefore, it is preferable that positive powers of the spots 3, 7, 12, and 16 disposed in and lower than the near vision region are made smaller (smaller in curvature) than positive powers of the higher spots 3, 7, 12, and 16.

For example, when it is assumed that power of +3D is relatively added to the myopia suppressing region,

spots of 2.5D are disposed in a region in which average power of the base lens is 0.5D on average with respect to the far vision power,
spots of 2.0D are disposed in a region in which average power of the base lens is 1.0D on average with respect to the far vision power, and
spots of 1.5D are disposed in a region in which average power of the base lens is 1.5D on average with respect to the far vision power.

<Seventh Embodiment>

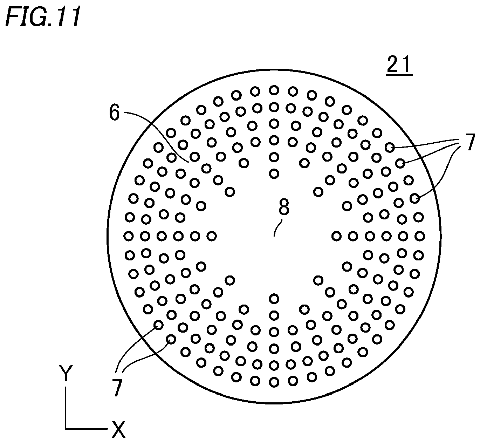

A seventh embodiment is a variation of the second embodiment. In a myopia suppressing lens 21 of the seventh embodiment, as in the second embodiment, the myopia progression suppressing region 6 consisting of the spots 3 is disposed in a ring shape so as to surround the clear vision region 8 disposed at a lens center. However, in the seventh embodiment, as illustrated in FIG. 11, the spots 3 disposed close to the center side of the lens are disposed at a lower distribution density than the spots 3 disposed close to the outer circumference of the lens.

With this myopia suppressing lens 21, the visual line frequently passes through the clear vision region 8, so that normal use as eyeglasses becomes less stressful.

<Eighth Embodiment>

An eighth embodiment is a variation of the third embodiment. A distribution state of the spots 12 in two-dimensional directions in the myopia progression suppressing regions 11 in a planar view is the same as in the third embodiment. That is, as in the third embodiment, the myopia progression suppressing regions 11 are disposed at both left and right positions avoiding in particular a region in which the visual line moves up and down (width of approximately 20 to 30% of a lens diameter length in the left-right direction) at the center in a lens vertical direction. However, in the eighth embodiment, refractive power of the spots 12 in a progressive zone region and a near vision region lower than the C line in FIG. 6 is designed to be more positive than refractive power of the spots 12 in the far vision region higher than the C line. In this eighth embodiment, the refractive power is more positive by 1.00D.

In this way, by disposing convex lenses having more positive power at portions where astigmatism and distortion of the progressive power lens concentrate and the visual line rarely passes through, an effect of suppressing the progression of myopia can be efficiently exerted without comparatively losing the visual field.

<Ninth Embodiment>

A ninth embodiment is a variation of the eighth embodiment.

In the eighth embodiment, the spots 3 disposed around the far vision region and the spots 3 disposed around the near vision region (lower than C line) are made different in refractive power from each other, however, instead of changing the refractive power from a certain line as in the eighth embodiment, the area ratio of the spots may be gradually changed. The ninth embodiment is an embodiment in which a distribution density (area ratio) of spots in the myopia progression suppressing region is changed.

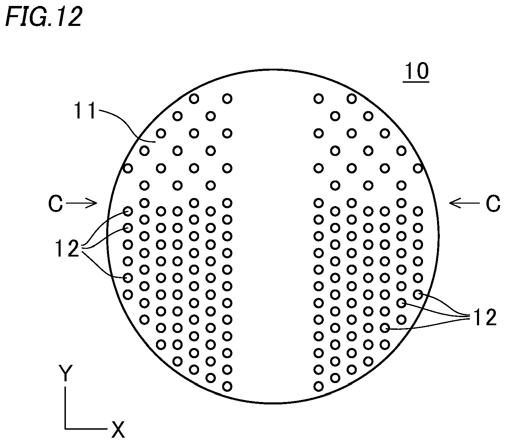

As illustrated in FIG. 12, it is possible that in a region higher than the vicinity of the C line, an area ratio of the spots 3 and a portion other than the spots 3 is set to "sparse" (for example, approximately 0.3 to 1), and in a region lower than the vicinity of the C line, the area ratio of the spots 3 and the portion other than the spots 3 is set to "dense" relative to the region higher than the C line (for example, approximately 0.8 to 1).

<Tenth Example>

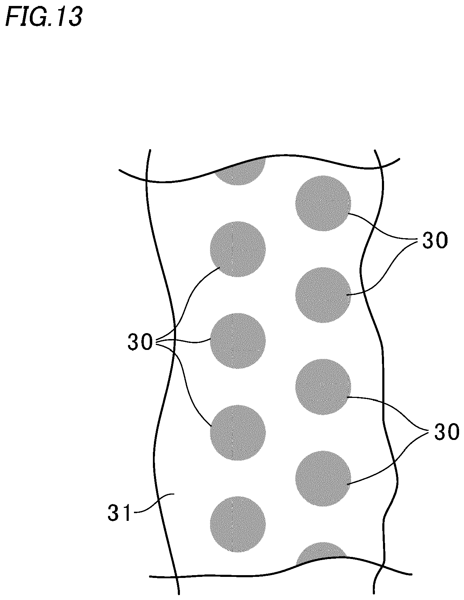

A tenth example is an example in which a large number of spots in a myopia progression suppressing region are not convex lenses but rough surfaces . In the tenth embodiment, as illustrated in FIG. 13, opaque glass-like island-shaped spots 30 are formed on a transparent lens base material in a planar view. In the tenth embodiment, a myopia suppressing lens in which the spots 30 are disposed at the same positions as, for example, distributed positions of the spots 3, 7, 12, and 16 in planar views in FIGS. 2, 4, 6, 7, 10, 11, and 12 can be formed. A myopia suppressing lens 31 having a myopia progression suppressing region including a large number of spots 30 successively disposed at intervals in two-dimensional directions can bring about the same effect as that of the myopia suppressing lenses of the first to ninth embodiments described above.

The above embodiments are merely described as detailed embodiments for illustrating the principle and concept of the present invention. That is, the present invention is not limited to the embodiments described above. The present invention can also be embodied by, for example, the following modifications.

- Shapes and distribution states of the spots 3, 7, 12, and 16 in the respective embodiments described above are just examples, and the present invention may be carried out with other shapes and distribution states.
- Astigmatism may be reduced by applying the spots 12 having toroidal surfaces of the fourth embodiment to other embodiments.
- The configuration that realizes good viewability in the near vision region by arranging spots to become sparse at the lower side as in the fifth embodiment may be applied to other embodiments.

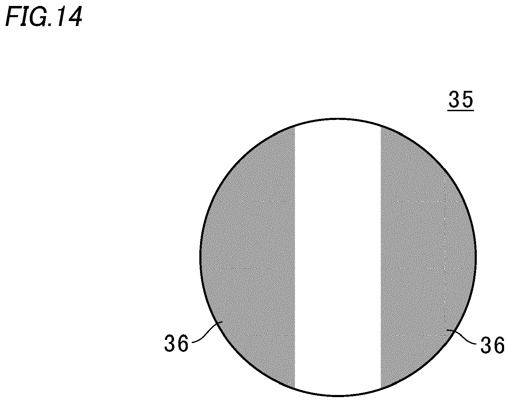

- In the embodiments described above, the myopia progression suppressing regions 6, 11, 15, and 19 consist of spots 3, 7, 12, and 16 having the same shape, however, the shapes of the spots do not necessarily have to be the same.
- In the sixth embodiment, the positive powers of the spots 3, 7, 12, and 16 disposed in and lower than the near vision region are set to be smaller than positive powers of the higher spots 3, 7, 12, and 16, however, the positive power in the near vision region may be set to be the same or the positive power may be further gradually decreased in the near vision region.
- An island-shaped rough surface region may be formed by shapes other than the spots 3, 7, 12 and 16.
- The tenth example is an example in which the convex lenses of the first to ninth embodiments are changed to frosted glass-like rough surfaces, and the rough surface regions are formed into island shapes. However, in the case where the myopia progression suppressing region is formed of rough surfaces, instead of forming the rough surfaces into island shapes as described above, the entire myopia progression suppressing region may be formed of a rough surface. For example, as in FIG. 14, when myopia progression suppressing regions 36 are formed at both left and right positions avoiding a region in which the visual line moves up and down (width of approximately 20 to 30% of a lens diameter length in the left-right direction) in a myopia suppressing lens 35, the entire left and right myopia progression suppressing regions 32 may be formed of frosted glass-like rough surfaces.

The invention as claimed in this application is not limited to the configurations described in the above embodiments. Components of the respective embodiments and modifications may be selected and combined according to the appended claims.

Reference Signs List

1, 5, 10, 18, 31, 35: Eyeglass lens for suppressing the progression of myopia, 3, 7, 12, 16: Spot as convex lens, 30: Spot as island-shaped rough surface region, 6, 11, 15, 19, 36: Myopia progression suppressing region

**Claims**

1. An eyeglass lens for suppressing the progression of myopia, comprising: a first region for viewing a comparatively far distance, disposed at an upper side of a lens (1); and a second region disposed at a lower side than the first region and having more positive refractive power relatively than the first region, wherein

   a myopia progression suppressing region (2) is disposed to surround a periphery of the first region and the second region,
   wherein the myopia progression suppressing region (2) consists of a group of several convex lenses (3) having a larger curvature than a front surface of the lens (1) and spaced from each other so as to spread in two-dimensional directions,
   **characterized in that** the eyeglass lens is a progressive power lens, and
   **in that** the group of several convex lenses consists of convex lenses having toroidal surface shapes (16), and are disposed at an angle that cancels out astigmatism of the lens (10).

2. The eyeglass lens for suppressing the progression of myopia according to Claim 1, wherein the group of the convex lenses (3) disposed close to a center side of the lens (1) has a smaller curvature than the group of the convex lenses (3) disposed close to an outer circumference of the lens (1).

3. The eyeglass lens for suppressing the progression of myopia according to Claim 1 or 2, wherein the myopia progression suppressing region is a region (6) that surrounds the first region (8) and the second region from the circumference so as to assume a ring-shaped donut form.

4. The eyeglass lens for suppressing the progression of myopia according to any one of Claims 1 to 3, wherein the myopia progression suppressing region (11) is disposed at left and right positions across the first region and the second region.

5. The eyeglass lens for suppressing the progression of myopia according to any one of Claims 1 to 4, wherein a distribution density of the group of several convex lenses (21) distributed in the myopia progression suppressing region (19) is set to become lower at the lower side than at the upper side.

6. The eyeglass lens for suppressing the progression of myopia according to any one of Claims 1 to 4, wherein a distribution density of the group of several convex lenses (7) disposed close to the center side of the lens (21) is set to be lower than a distribution density at a position close to the outer circumference of the lens (21).

7. The eyeglass lens for suppressing the progression of myopia according to Claim 1 or 2, wherein the convex lenses disposed in a left-right direction of the second region produce smaller positive power than the convex lenses not disposed in the left-right direction of the second region.

8. The eyeglass lens for suppressing the progression of myopia according to any one of Claims 1 to 7, wherein a progressive zone region in which refractive power progressively changes is provided between the first region and the second region, and an addition gradient is set so that addition power is gradually added from the first region to the second region.

9. The eyeglass lens for suppressing the progression of myopia according to Claim 8, wherein the myopia progression suppressing region is disposed at left and right positions across the progressive zone region and the second region.

10. The eyeglass lens for suppressing the progression of myopia according to Claim 8 or 9, wherein the myopia progression suppressing region (2) is formed on a surface on a side different from either the front surface or the back surface of the lens (1) on which the first region, the second region, and the progressive zone region are provided.

11. The eyeglass lens for suppressing the progression of myopia according to Claim 9 or 10, wherein with respect to a surface ratio obtained by dividing a total area occupied by the myopia progression suppressing region (2) by a total area occupied by a portion other than the myopia progression suppressing region (2), the area ratio in the vicinity of the first region is smaller than the area ratio in the vicinity of the second region.

12. The eyeglass lens for suppressing the progression of myopia according to any one of Claims 8 to 11, wherein the myopia progression suppressing region (2) consists of the group of the convex lenses (3), and refractive power of the convex lens (3) disposed in the vicinity of the progressive zone region (2) and the second region is set to be more positive than refractive power of the convex lens (3) in the myopia progression suppressing region (2) disposed in the vicinity of the first region.

**Patentansprüche**

1. Brillenglas zum Unterdrücken von Myopieprogression, umfassend: einen ersten Bereich zum Betrachten einer vergleichsweise weiten Entfernung, der an einer Oberseite einer Linse (1) angeordnet ist; und einen zweiten Bereich, der an einer niedrigeren Seite als der erste Bereich angeordnet ist und eine positivere Brechkraft als der erste Bereich aufweist, wobei

    ein Myopieprogression-Unterdrückungsbereich (2) angeordnet ist, um einen Rand des ersten Bereichs und des zweiten Bereichs zu umgeben,
    wobei der Myopieprogression-Unterdrückungsbereich (2) aus einer Gruppe von mehreren konvexen Linsen (3) besteht, die eine größere Krümmung als eine vordere Oberfläche der Linse (1) aufweisen und voneinander beabstandet sind, sodass sie sich in zweidimensionale Richtungen auszubreiten,
    **dadurch gekennzeichnet, dass** das Brillenglas eine Linse progressiver Stärke ist, und
    dass die Gruppe von mehreren konvexen Linsen aus konvexen Linsen besteht, die toroidale Oberflächenformen (16) aufweisen und in einem Winkel angeordnet ist, der einen Astigmatismus der Linse (10) ausgleicht.

2. Brillenglas zum Unterdrücken von Myopieprogression nach Anspruch 1, wobei die Gruppe der konvexen Linsen (3), die nahe einer mittleren Seite der Linse (1) angeordnet sind, eine geringere Krümmung aufweist als die Gruppe der konvexen Linsen (3), die nahe eines äußeren Umfangs des Brillenglases (1) angeordnet sind.

3. Brillenglas zum Unterdrücken von Myopieprogression nach Anspruch 1 oder 2, wobei der das Fortschreiten der Myopie unterdrückende Bereich ein Bereich (6) ist, der den ersten Bereich (8) und den zweiten Bereich von dem Umfang umgibt, um eine ringförmige Donutform anzunehmen.

4. Brillenglas zum Unterdrücken von Myopieprogression nach einem der Ansprüche 1 bis 3, wobei der Myopieprogression-Unterdrückungsbereich (11) an linken und rechten Positionen in dem ersten Bereich und dem zweiten Bereich angeordnet ist.

5. Brillenglas zum Unterdrücken von Myopieprogression nach einem der Ansprüche 1 bis 4, wobei eine Verteilungsdichte der Gruppe von mehreren konvexen Linsen (21), die in dem Myopieprogression-Unterdrückungsbereich (19) verteilt sind, eingestellt ist, um an der unteren Seite geringer zu werden als an der oberen Seite.

6. Brillenglas zum Unterdrücken von Myopieprogression nach einem der Ansprüche 1 bis 4, wobei eine Verteilungsdichte der Gruppe von mehreren konvexen Linsen (7), die nahe der mittleren Seite der Linse (21) angeordnet sind, eingestellt ist, um niedriger zu sein als eine Verteilungsdichte an einer Position nahe dem äußeren Umfang der Linse (21).

7. Brillenglas zum Unterdrücken von Myopieprogression nach Anspruch 1 oder 2, wobei die in einer Links-Rechts-Richtung des zweiten Bereichs angeordneten konvexen Linsen eine geringere positive Stärke erzeugen als die nicht in der Links-Rechts-Richtung des zweiten Bereichs angeordneten konvexen Linsen.

8. Brillenglas zum Unterdrücken von Myopieprogression nach einem der Ansprüche 1 bis 7, wobei zwischen dem ersten Bereich und dem zweiten Bereich ein progressiver Zonenbereich bereitgestellt ist, in dem sich die Brechkraft progressiv ändert, und ein Additionsgradient eingestellt ist, sodass die Additionskraft allmählich von dem ersten Bereich zu dem zweiten Bereich hinzugefügt wird.

9. Brillenglas zum Unterdrücken von Myopieprogression nach Anspruch 8, wobei der Myopieprogression-Unterdrückungsbereich an linken und rechten Positionen in dem progressiven Zonenbereich und dem zweiten Bereich angeordnet ist.

10. Brillenglas zum Unterdrücken von Myopieprogression nach Anspruch 8 oder 9, wobei der Myopieprogression-Unterdrückungsbereich (2) auf einer Oberfläche auf einer Seite gebildet ist, die sich entweder von der vorderen Oberfläche oder der hinteren Oberfläche des Brillenglases (1) unterscheidet, auf der der erste Bereich, der zweite Bereich und der progressive Zonenbereich bereitgestellt sind.

**11.** Brillenglas zum Unterdrücken von Myopieprogression nach Anspruch 9 oder 10, wobei das Flächenverhältnis in der Nähe des ersten Bereichs in Bezug auf ein Flächenverhältnis, das durch Teilen einer Gesamtfläche, die von dem Myopieprogression-Unterdrückungsbereich (2) eingenommen wird, durch eine Gesamtfläche, die von einem anderen Abschnitt als dem Myopieprogression-Unterdrückungsbereich (2) eingenommen wird, erlangt wird, kleiner ist als das Flächenverhältnis in der Nähe des zweiten Bereichs.

**12.** Brillenglas zum Unterdrücken von Myopieprogression nach einem der Ansprüche 8 bis 11, wobei der Myopieprogression-Unterdrückungsbereich (2) aus der Gruppe der konvexen Linsen (3) besteht und die Brechkraft der konvexen Linse (3), die in der Nähe des progressiven Zonenbereichs (2) und des zweiten Bereichs angeordnet ist, eingestellt ist, um positiver zu sein als die Brechkraft der konvexen Linse (3) in dem Myopieprogression-Unterdrückungsbereich (2), der in der Nähe des ersten Bereichs angeordnet ist.

## Revendications

**1.** Verre oculaire permettant de supprimer la progression de la myopie, comprenant : une première région pour visualiser une distance comparativement éloignée, disposée au niveau d'un côté supérieur d'une lentille (1) ; et une deuxième région disposée au niveau d'un côté inférieur à la première région et ayant une réfringence positive plus importante que la première région, dans laquelle

une région de suppression de progression de la myopie (2) est disposée de manière à entourer un pourtour de la première région et de la deuxième région,
dans laquelle la région supprimant la progression de la myopie (2) consiste en un groupe de plusieurs lentilles convexes (3) ayant une courbure plus importante qu'une surface frontale de la lentille (1) et espacées les unes des autres de sorte à s'étendre dans des directions bidimensionnelles,
**caractérisée en ce que** la lentille est une lentille progressive, et
**en ce que** le groupe de plusieurs lentilles convexes consiste en des lentilles convexes ayant des formes de surface toroïdales (16), et sont disposées selon un angle qui neutralise l'astigmatisme de la lentille (10).

**2.** Verre oculaire permettant la suppression de la progression de la myopie selon la revendication 1, dans laquelle le groupe des lentilles convexes (3) disposé près d'un côté central de la lentille (1) a une courbure plus faible que le groupe des lentilles convexes (3) disposé près d'une circonférence externe de la lentille (1).

**3.** Verre oculaire permettant la suppression de la progression de la myopie selon la revendication 1 ou 2, dans laquelle la région supprimant la progression de la myopie est une région (6) qui entoure la première région (8) et la deuxième région à partir de la circonférence de sorte à prendre une forme de donut annulaire.

**4.** Verre oculaire permettant la suppression de la progression de la myopie selon l'une quelconque des revendications 1 à 3, dans laquelle la région supprimant la progression de la myopie (11) est disposée dans des positions gauche et droite à travers la première région et la deuxième région.

**5.** Verre oculaire permettant la suppression de la progression de la myopie selon l'une quelconque des revendications 1 à 4, dans laquelle une densité de répartition du groupe de plusieurs lentilles convexes (21) réparties dans la région supprimant la progression de la myopie (19) est établie de façon à devenir plus faible au niveau du côté inférieur qu'au niveau du côté supérieur.

**6.** Verre oculaire permettant la suppression de la progression de la myopie selon l'une quelconque des revendications 1 à 4, dans laquelle une densité de répartition du groupe de plusieurs lentilles convexes (7) disposées près du côté central de la lentille (21) est établie de façon à devenir plus faible qu'une densité de répartition au niveau d'une position proche de la circonférence externe de la lentille (21).

**7.** Verre oculaire permettant la suppression de la progression de la myopie selon la revendication 1 ou 2, dans laquelle les lentilles convexes disposées dans une direction gauche-droite de la deuxième région produisent une puissance positive plus faible que les lentilles convexes non disposées dans la direction gauche-droite de la deuxième région.

**8.** Verre oculaire permettant la suppression de la progression de la myopie selon l'une quelconque des revendications 1 à 7, dans laquelle une région à zone progressive dans laquelle la réfringence change progressivement est prévue entre la première région et la deuxième région, et un gradient d'addition est établi de telle sorte que la puissance d'addition est graduellement ajoutée de la première région à la deuxième région.

**9.** Verre oculaire permettant la suppression de la progression de la myopie selon la revendication 8, dans laquelle la région supprimant la progression de la myopie est disposée au niveau de positions gauche et droite à travers la région à zone progressive et la deuxième région.

**10.** Verre oculaire permettant la suppression de la progression de la myopie selon la revendication 8 ou 9, dans laquelle la région supprimant la progression de la myopie (2) est formée sur une surface sur un côté différent de la surface frontale ou bien de la surface arrière de la lentille (1) sur lequel la première région, la deuxième région et la région à zone progressive sont prévues.

**11.** Verre oculaire permettant la suppression de la progression de la myopie selon la revendication 9 ou 10, dans laquelle par rapport à un rapport de surface obtenu en divisant une surface totale occupée par la région supprimant la progression de la myopie (2) par une surface totale occupée par une partie autre que la région supprimant la progression de la myopie (2), le rapport de surface au voisinage de la première région est inférieur au rapport de surface au voisinage de la deuxième région.

**12.** Verre oculaire permettant la suppression de la progression de la myopie selon l'une quelconque des revendications 8 à 11, dans laquelle la région supprimant la progression de la myopie (2) consiste en le groupe des lentilles convexes (3), et la réfringence de la lentille convexe (3) disposée au voisinage de la région à zone progressive (2) et de la deuxième région est établie comme étant plus positive que la réfringence de la lentille convexe (3) dans la région supprimant la progression de la myopie (2) disposée au voisinage de la première région.

FIG.1A

FIG.1B

FIG.2

FIG.3

FIG.4

*FIG.5*

FIG.6

*FIG.7*

## FIG.8

−0.25

−0.75

+

Local power of base lens
S−0.25 C−0.50 AX100

+3.25

16

+3.75

Power of spot having
toroidal surface
S+3.25 C+0.50 AX100

⇓

+3.00

16

+3.00

Power of base + spot having
toroidal surface
S+3.00

*FIG.9*

Power of spot having toroidal surface
S+3.25 C+0.50

FIG.10

FIG.11

FIG.12

FIG.13

FIG.14

*FIG.15A*

*FIG.15B*

*FIG.15C*

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 10268050 B
- US 2020089023 A
- JP 2020213185 A